(19) Europäisches Patentamt
European Patent Office
Office européen des brevets

(11) EP 1 059 379 B1

(12) # EUROPÄISCHE PATENTSCHRIFT

(45) Veröffentlichungstag und Bekanntmachung des Hinweises auf die Patenterteilung:
**22.02.2006 Patentblatt 2006/08**

(51) Int Cl.:
***D06N 3/14*** *(2006.01)* ***C08J 7/04*** *(2006.01)*
***C09D 175/08*** *(2006.01)* ***D06N 3/00*** *(2006.01)*
***C08G 18/48*** *(2006.01)* ***C08G 18/22*** *(2006.01)*

(21) Anmeldenummer: **00111025.3**

(22) Anmeldetag: **31.05.2000**

(54) **Verbundgebilde mit einer oder mehreren Polyurethanschichten, Verfahren zu deren Herstellung und ihre Verwendung**

Laminates with one or more polyurethane layers, method of manufacture and their use

Stratifiés avec une ou plusieurs couches de polyuréthane, procédé d'obtention et leur utilisation

(84) Benannte Vertragsstaaten:
**ES FR GB IT PT SE**

(30) Priorität: **07.07.1999 DE 19931323**

(43) Veröffentlichungstag der Anmeldung:
**13.12.2000 Patentblatt 2000/50**

(73) Patentinhaber: **Benecke-Kaliko AG**
**30007 Hannover (DE)**

(72) Erfinder:
- **Zürbig, Claus, Dr.**
  **30163 Hannover (DE)**
- **Kruse, Hans-Hinrich, Dr.**
  **30890 Barsinghausen (DE)**

(74) Vertreter: **Finger, Karsten et al**
**Continental Aktiengesellschaft,**
**Vahrenwalder Str. 9**
**30165 Hannover (DE)**

(56) Entgegenhaltungen:
**CH-A- 476 153**
**DE-A- 2 208 995**
**DE-A- 2 330 175**
**GB-A- 1 144 176**
**GB-A- 1 345 017**
**US-A- 4 102 719**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft Verbundgebilde mit einer oder mehreren Polyurethanschichten, ein Verfahren zu deren Herstellung sowie deren Verwendung, insbesondere als Kunstleder.

Unter Verbundgebilden versteht man Gebilde aus Verbundwerkstoffen, die durch Kombination unterschiedlicher Materialien erhalten werden und deren chemische, physikalische und sonstige Eigenschaften die der Einzelkomponenten übertreffen. Zu den Verbundwerkstoffen werden neben den Textilverbundstoffen, den Vließstoffen, den Schichtpreßstoffen, d.h. ineinander durch Kleben oder Kaschieren verbundene Werkstoffe in Sandwichanordnung (z.B. Sperrholz, Verbundfolien und Laminate), auch Kunstleder gezählt. Unter Kunstleder wird hier ein mehrschichtiges flexibles Verbundgebilde verstanden, das ein Polymer in der Oberflächenschicht und ein Trägermaterial, insbesondere aus Textil, Vlies oder einem geschäumten Material, z.B. aus PVC, Polyolefin oder Polyurethan, umfaßt. Die polymere Deckschicht ist für die Abrieb- und Stoßfestigkeit verantwortlich und bestimmt das Aussehen, während der Träger die Festigkeit und Dehnbarkeit erbringt. Als Beschichtungspolymere werden u.a. Polyurethane eingesetzt. Grundsätzlich werden ein- und zweikomponentige Beschichtungssysteme unterschieden.

DE-A-2208995, DE-A-2330175 und GB-A-1144176 beschreiben eine Verbungebilde mit eine oder mehreren polyurethanschichten und einer Trägerschicht US-A-4102719 offenbart einen mit Polyurethan beschichteten träger, wobei das Polyurethan aus einem polyethertriol und einem Polyetherdiol hergestellt und nachvernetzt wird.

Die einkomponentigen Beschichtungsmassen werden als Lösungen (Festkörpergehalt etwa 20 bis 30%) in organischen Lösungsmitteln (z.B. DMF, 2-Propanol, Toluol) oder als Dispersionen (Festkörpergehalt etwa 20 bis 40%) verarbeitet. Nach dem Ausstreichen, z.B. auf einem Band, wie es in der DE-A-4422871 beschrieben ist, erfolgt die Filmbildung durch Verdampfen des Lösungsmittels im Trockenkanal. Durch Zugabe von langsam reagierenden polyfunktionellen Vernetzern (z.B. aliphatische Polyisocyanate) können einkomponentige Polyurethane nachvemetzt werden, um die Eigenschaften, wie z.B. die Chemikalienbeständigkeit, zu verbessern. Aufgrund des niedrigen Festkörpergebaltes eignen sich einkomponentige Polyurethanbeschichtungssysteme zum Aufbringen dünner Filme.

Bei den zweikomponentigen Beschichcungssystemen handelt es sich um reaktive Mischungen, z.B. aus funktionalisierten Präpolymeren und Vernetzern mit geringen Anteilen an organischen Lösungsmitteln (< 5 bis 10%). Im Gegensatz zu den ein komponentigen Systemen polymerisieren diese "High-Solid-Systeme" unter den Verarbeitungsbedingungen und bilden so den Urethanfilm. Um eine ausreichende Topfzeit (Zeitspanne, in der ein Ansatz nach dem Mischen aller Bestandteile verarbeitbar bleibt) bei Raumtemperatur zu gewährleisten, werden Isocyanatkomponenten eingesetzt, deren endständige Isocyanatgruppen durch Blockierungsmittel (z.B. 2-Butanonoxim) reversibel geschützt sind. Die chemische Reaktion läuft dann in zwei Schritten ab. Zunächst wird bei Temperaturen oberhalb 140°C das Blockierungsagens abgespalten und die freie NCO-Gruppe zurückgebildet. In einem zweiten Schritt reagiert die Isocyanatendgruppe mit dem Kettenverlängerer unter Erhöhung des Molekulargewichts. Auf diese Art baut sich das Molekulargewicht des Polymers bis zum Polyurethanfilm sukzessiv auf. Nachteilig ist dabei die relativ geringe Auswahl an blokkierten Isocyanatderivaten, die für dieses System zur Verfügung steht. Dies führt zu einer geringen Variabilität bei der Auswahl der Edukte und folglich zu starken Einschränkungen bei der Möglichkeit, die Zusammensetzung des Produktes zur Anpassung an gewünschte Eigenschaften zu verändern. Ein weiterer Nachteil des Systems liegt darin, daß ein hoher Reaktionsumsatz nur bei langer Verweilzeit unter hohen Temperaturen erreicht werden kann. Dies begrenzt die Produktionsgeschwindigkeit und führt zusammen mit dem hohen Preis der blockierten Isocyanatderivate zu hohen Produktionskosten.

Es war daher Aufgabe der vorliegenden Erfindung, Verbundgebilde mit Polyurethanschichten bereitzustellen, die aufgrund der großen Vielzahl verfügbarer und einsetzbarer Edukte zu einer großen Variabilität bei der Zusammensetzung und somit den gewünschten Eigenschaften des Produktes führen. Ferner sollten die Produktionskosten gesenkt werden. Eine weitere Aufgabe der Erfindung bestand darin, ein zur Herstellung solcher Verbundgebilde besonders geeignetes Verfahren vorzuschlagen.

Erfindungsgemäß wird diese Aufgabe durch ein Verbundgebilde mit ein oder mehreren Polyurethanschichten, einer Trägerschicht, inbesondere einer textilen Trägerschicht oder einer Trägerschicht aus PVC, Polyolefin oder Polyurethanschaum, sowie einer gegebenenfalls zwischen diesen Schichten angeordneten Klebstoffschicht gelöst, wobei mindestens eine der Polyurethanschichten ein Polyurethan der Formel (I)

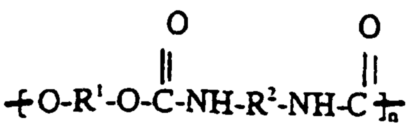

(I)

enthält, worin bedeuten:

-O-$R^1$-O- die Reste zumindest zweier Polyole mit endständigen primären und/oder sekundären Hydroxyfunktionalitäten,

$R^1$ und $R^2$ unabhängig voneinander einen organischen Rest, der aliphatische, cycloaliphatische, aromatische und/oder heterocyclische Gruppen umfaßt, und

n eine ganze Zahl von 1 bis 50.000, bei den Polyolen handelt sich um bifunktionelle und trifunktionelle Polyole, wobei das Verhältnis der bifunktionellen Polyole zu den trifunktionellen Polyolen von 1 zu 2 bis 5 zu 1 ist.

Vorzugsweise sind zwei Polyurethanschichten in dem Verbundgebilde vorgesehen, wobei die äußere und/oder die innere Polyurethanschicht ein Polyurethan der Formel (I) enthält.

Das dem Rest -O-$R^1$-O- zugrundeliegende Polyol weist vorzugsweise ein Molekulargewicht von 2000 bis 12000 auf, wobei Polyetherglykole und/oder Polyesterglykole, insbesondere Poly(oxypropylen)glykole und/oder Glykole dimerer Fettsäuren, bevorzugt sind. Das Verhältnis der primären zu den sekundären Hydroxyfunktionalitäten des eingesetzten Polyols stellt einen in Bezug auf das Endprodukt wichtigen Parameter dar. Vorzugsweise stehen die primären und sekundären Hydroxyfunktionalitäten des Polyols im Verhältnis von 2 zu 1 bis 1 zu 6. Der Einsatz unpolarer Polyesterpolyole führt zu hydrolytisch und thermisch besonders stabilen Beschichtungen.

Das Spektrum der eingesetzten Diisocyanatkomponenten, auf die der Rest $R^2$ zurückgeht, unterliegt keinen prinzipiellen Einschränkungen. Von besonderem Vorteil ist jedoch der Einsatz von Isophorondiiocyanat, Hexamethylendiisocyanat, Toluylendiisocyanat und/oder Diphenylmethandiisocyanat (MDI).

Von großer Bedeutung für die Gebrauchseigenschaften der erfindungsgemäßen Verbundgebilde sind auch die Filmeigenschaften der Polyurethanbeschichtungen. Vorzugsweise weisen die Polyurethanbeschichtungen, die das Polyurethan der Formel (I) enthalten, einen Festkörpergehalt von mindestens 95%, insbesondere 97%, eine Dicke von 0,2 mm bis 0,5 mm, insbesondere von 0,3 mm bis 0,4 mm, und/oder eine Dichte von 0,3 g/ml bis 0,8 g/ml, insbesondere von 0,4 g/ml bis 0,7 g/ml, auf.

Als besonders vorteilhaft hat es sich erwiesen, daß das erfindungsgemäße Verbundgebilde, bedingt durch die Abwesenheit eines niedermolekularen Blockierungsreagenzes, einen sehr geringen Gehalt an flüchtigen organischen Chemikalien aufweist. Bei den im Stand der Technik beschriebenen Polyurethanbeschichtungen, die auf den Einsatz von mit 2-Butanonoxim blockierten Diisocyanaten beruhen, bleiben stets Reste des Blockierungsmittels in der fertigen Polyurethanschicht zurück. Dies führt zu einem unangenehmen Geruch des Produktes und stellt aufgrund der toxikologischen Eigenschaften des 2-Butanonoxims auch ein gesundheitliches Risiko dar. Die erfindungsgemäßen Verbundgebilde enthalten vorzugsweise Polyurethanschichten, die das Polyurethan der Formel (I) enthalten, deren Gehalt an flüchtigen organischen Chemikalien (VOC) unter 100 ppm ist. Die Messung des Gehalts an flüchtigen organischen Chemikalen erfolgte nach PB VWT 709 (Fresenius) durch Vergleich mit einem externen Toluol-Standard.

Aus ästhetischen Gründen ist es bevorzugt, daß das erfindungsgemäße Verbundgebilde eine Prägung aufweist, die ihm den Eindruck eines Leders verleiht. Zur Erhöhung der thermischen Beständigkeit kann eine Stabilisierung der Polyurethanbeschichtung mit phenolischen Antioxidantien erfolgen. Der Einsatz von HALS (Hindered Aminic Light Stabilizers) führt zu verbesserter Beständigkeit gegenüber UV-Strahlung. Als weitere Additive können Pigmente, Füllstoffe, Flammschutzmittel sowie Treibmittel für geschäumte Zwischenschichten dienen.

Ein weiterer Gegenstand der Erfindung ist ein Verfahren zur Herstellung der beschriebenen Verbundgebilde. Das erfindungsgemäBe Verfahren umfaßt folgende Schritte:

a) eine oder mehrere Polyurethanschichten werden auf einen dehäsiv ausgerüsteten Träger aufgebracht, wobei mindestens eine der Polyurethanschichten ausgebildet wird, indem eine zur Bildung eines Polyurethans fähige reaktive Streichmasse der Zusammensetzung (A), die

i) ein Polyol HO-$R^1$-OH mit primären und/oder sekundären endständigen Hydroxyfunktionalitäten, ii) ein Diisocyanat OCN-$R^2$-NCO und/oder ein Diisocyanat-Präpolymer OCN-$R^2$-NH-CO-O-$R^1$-O-CO-NH-$R^2$-NCO, wobei $R^1$ und $R^2$ unabhängig voneinander für einen organischen Rest stehen, der aliphatische, cycloaliphatische, aromatische und/oder heterocyclische Gruppen umfaßt, und iii) einen Katalysator enthält, auf das Band bzw. eine vorgebildete Polyurethanbeschichtung des Bandes ausgestrichen und thermisch ausgehärtet wird; b) gegebenenfalls wird eine Klebstoffschicht auf die ausgehärtete Polyurethanschicht aufgebracht; c) eine Trägerschicht, insbesondere eine textile Trägerschicht, wird auf der dem Band entgegengesetzten Seite aufgebracht und d) das Verbundgebilde wird, gegebenenfalls nach Aushärten der Klebstoffschicht, von dem Band abgezogen.

Das erfindungsgemäße Verfahren wird vorzugsweise im Sinne einer Umkehrbeschichtung durchgeführt, d.h. diejenige Schicht, die im Endprodukt als Oberfläche dienen soll, wird zuerst auf das Band aufgebracht. In einem besonders bevorzugtem Verfahren werden zwei Polyurethanschichten aufgebracht, wobei die äußere und/oder die innere Polyurethanschicht unter Verwendung einer zur Bildung eines Polyurethans fähigen reaktiven Streichmasse der Zusammensetzung (A) gebildet wird.

Das erfindungsgemäße Verfahren unterscheidet sich von bisherigen Verfahren insbesondere auch durch den Einsatz eines Katalysators. Der Einsatz des Katalysators und die ausgeprägte Temperaturabhängigkeit der Reaktionsgeschwindigkeit führen zu einer hohen Flexibilität des Herstellungsprozesses. Besonders bevorzugte Katalysatoren sind die Metallacetylacetonate, wobei sich Nickelacetylacetonat als besonders geeignet erwiesen hat. Bei hohen Temperaturen (T. > 70°C) erreicht das Nickelacetylacetonat seine katalytische Aktivität (siehe Gleichung (1), so daß die Vernetzungsreaktion bei z.B. T = 150°C bereits nach 2 Minuten abgeschlossen ist.

$$Ni(C_5H_7O_2) \xrightarrow{T>70°C} Ni^{2+} + 2\,[C_5H_7O_2]^- \qquad (1)$$

Die Katalyse erfolgt dabei vermutlich durch das freigesetzte $Ni^{2+}$-Kation, wobei der in Gleichung (2) dargestellte Mechanismus angenommen wird. 04-08-20

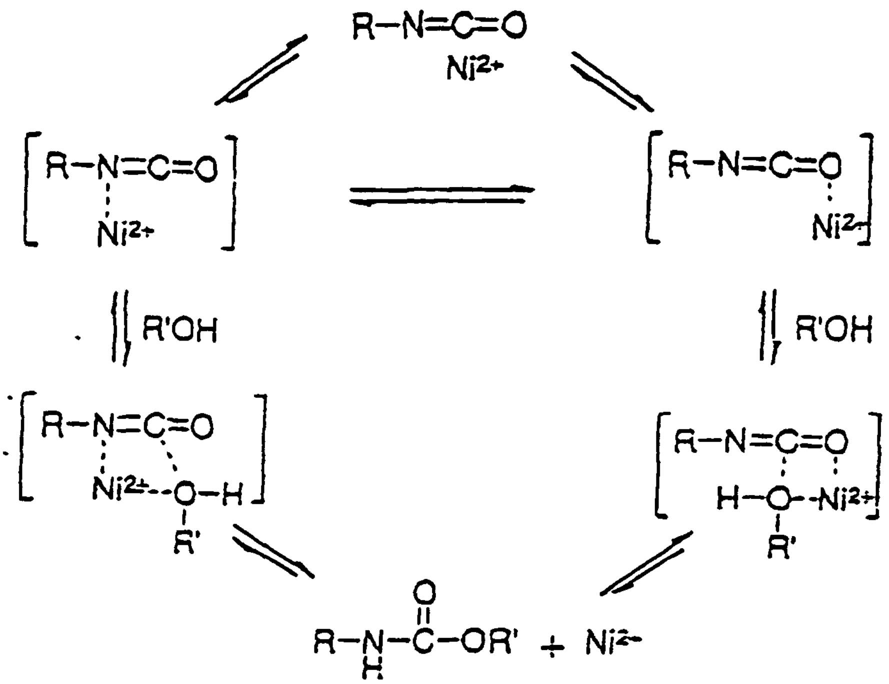

(2)

Bei besonders bevorzugten Ausführungsformen des erfindungsgemäßen Verfahrens werden zur Bildung von Polyurethanen fähige reaktive Streichmassen eingesetzt, die für den Produktionsablauf besonders vorteilhafte Eigenschaften aufweisen. So liegt die Viskosität der Streichmasse vorzugsweise im Bereich von 1 Pa s bis 20 Pa s, insbesondere 5 Pa s bis 15 Pa s. Die mittlere Scherbeanspruchung kann über Gleichung (3) abgeschätzt werden.

$$SR = \frac{V_p}{d} \qquad (3)$$

SR = Scherrate [$s^{-1}$], $V_p$ = Produktionsgeschwindigkeit [m/s], d = Rakelspalt [m]

Danach ergibt sich für eine Produktionsgeschwindigkeit von $V_p$ = 0,17 m/s (entspricht 10 m/min) bei einem Rakelspalt von d = 4 x $10^{-4}$ m die Scherrate zu SR = 425 $s^{-1}$. Basierend auf dieser Abschätzung ist es günstig, wenn die Masse bei einer Scherbeanspruchung im Bereich von 200 $s^{-1}$ < SR < 600 $s^{-1}$ niedrigviskos und damit besser flieBfähig wird. Es ist daher bevorzugt, daß die Streichmasse ein situkturviskoses Verhalten zeigt. Für die Aufbereitung der Streichmasse und die nachfolgende Verarbeitung der Paste muß eine ausreichend große offene Zeit (Topfzeit) des Systems gewährleistet sein. Diese definiert sich als der Zeitraum, innerhalb dessen die Viskosität der Streichmasse in einem für

die nachfolgende Bearbeitung akzeptablen Bereiches liegt, für das erfindungsgemäße Verfahren insbesondere im Bereich von 1 Pa s bis 20 Pa s. Als produktionssicher wird vorzugsweise eine offene Zeit von mehr als 6 Stunden, insbesondere mehr als 8 Stunden, angesehen.

Ein wesentlicher Parameter für eine wirtschaftliche Produktion ist die Produktionsgeschwindigkeit. Diese hängt wesentlich von der benötigten Verweilzeit bei der thermischen Aushärtung der Beschichtung ab. Vorzugsweise erfolgt die thermische Aushärtung über einen Zeitraum von 0,1 bis 4 Minuten bei 100 bis 180 °C. Besonders bevorzugt ist dabei ein Zeitraum von 90 bis 150 Sekunden bei 145 bis 155°C.

Im Gegensatz zu den gut thermisch prägbaren PVC-Laminaten sind Polyurethane aufgrund ihres elastomeren Charakters nur aufwendig prägbar. Eine feinstrukturierte Narbe kann daher nur durch Umkehrbeschichtung auf negativ genarbten Trägern hergestellt werden. Vorzugsweise weist der bei dem erfindungsgemäßen Verfahren verwendete dehäsiv ausgerüstete Träger daher ein Negativ einer gewünschten Prägung auf. Bei Anwendung der Transferbeschichtungen können vernetzende Polyurethanrohstoffe eingesetzt werden, so daß Formkörper mit hohen thermischen und mechanischen Stabilitäten erhalten werden.

Die erfindungsgemäßen Verbundgebilde zeigen zahlreiche Vorteile, sie eignen sich insbesondere zur Verwendung als Kunstleder oder Schaumfolie. Insbesondere führt die große Variabilität der einsetzbaren Edukte dazu, daß nach Art eines Baukastensystems die Eigenschaften des Produktes in großem Umfang variiert und somit den verschiedenen Zielvorgaben optimal angepaßt werden können. Ein weiterer Vorteil liegt im günstigeren Preis der Edukte im Vergleich zu den bisher eingesetzten (mit Blockierungsreagenzien derivatisierten) Edukten. Da der Einsatz des Katalysators ein Variieren der Reaktivität der eingesetzten Streichmassen erlaubt, führt die Möglichkeit zur flexibleren Gestaltung des Produktionsablaufs zu weiteren Kostenvorteilen. Der Verzicht auf die mit Blockierungsreagenzien derivatisierten Edukte verbessert die Eigenschaften des erfindungsgemäßen Produktes insbesondere hinsichtlich Geruch und Gehalt an flüchtigen organischen Chemikalien deutlich. Die Erfindung soll nachfolgend anhand von Beispielen noch näher veranschaulicht werden:

**Beispiel 1**

Zur Herstellung eines erfindungsgemäßen Verbundgebildes wurde eine zur Bildung eines Polyurethans fähige reaktive Streichmasse mit folgender Zusammensetzung herangezogen:

| | |
|---|---|
| 500 g | Poly(oxypropylen)triol (Molekulargewicht 6000) |
| 610 g | Poly(oxypropylen)diol (Molekulargewicht 4000) |
| 400 g | MDI (Methylendiphenyldiisocyanatoligomer) (Molekulargewicht 1200) |
| 10 g | Nickelacetylacetonat 10 % ig in Poly(oxypropylen)glykol |

Unmittelbar nach dem Abmischen wurde die reaktive Streichmasse mit Hilfe einer Walzenrakel-Streichmaschine auf einen dehäsiv ausgerüsteten Träger aufgebracht, auf den zuvor eine Polyurethan-Deckschicht durch konventionelle Lösungsmittel-Polyurethanbeschichtung aufgebracht worden war. Anschließend durchlief der so beschichtete dehäsiv ausgerüstete Träger einen Heißluftofen. Die reaktive Streichmasse wurde durch Erhitzen für 70 Sekunden auf 150°C auspolymerisiert. Auf die ausgehärtete Polyurethanschicht wurde eine Klebstoffschicht aufgebracht. Mit Hilfe eines Kaschierwerkes wurde ein textiler Träger in die noch feuchte Klebstoffschicht einkaschiert. Anschließend wurde das beschichtete Textil vom dehäsiv ausgerüsteten Träger getrennt.

**Beispiel 2 (Vergleichsbeispiel)**

Zu Vergleichszwecken wurde ein Verbundgebilde unter Verwendung einer gebräuchlichen zur Bildung eines Polyurethans fähigen reaktiven Streichmasse, die 2-Butanonoxim-blockierte Diisocyanate enthält, hergestellt. Die Zusammensetzung dieser reaktiven Streichmasse war dabei wie folgt:

| | |
|---|---|
| 500 g | Impranil HS-62® (2-Butanonoxim-blockiertes Prepolymer) |
| 500 g | Impranil HS-80® (2-Butanonoxim-blockiertes Prepolymer) |
| 71 g | Imprafix HSC® (cycloaliphatisches Diamin, Vernetzer) |
| 10 g | Levacast Fluid SW® (Verarbeitungshilfsmittel) |

Diese reaktive Streichmasse wurde ebenfalls zu einem Verbundgebilde verarbeitet. Die Verarbeitung erfolgte wie in Beispiel 1, mit der Ausnahme, daß das Aushärten der reaktiven Streichmasse 2 Minuten lang bei 150°C erfolgte.

In der nachfolgenden tabellarischen Aufstellung werden die in Beispiel 1 und 2 (Vergleichsbeispiel) hergestellten

Verbundgebilde hinsichtlich der Eigenschaften der reaktiven Streichmassen, der Produktionseigenschaften und der Eigenschaften des fertiggestellten Verbundgebildes verglichen:

Tabelle 1: Eigenschaften der reaktiven Streichmassen

| **Eigenschaft** | **Bsp. 1** | **Bsp. 2 (Vergleichsbsp.)** |
|---|---|---|
| Vernetzer | oligomere Diisocyanate | cycloaliphatische Diamine |
| Topfzeit ("offene Zeit") | 10 h | 24 h |
| Lösungsmittelgehalt | 5 % | 10% |
| Variabilität | großer Rohstofibaukasten | eingeschränkt durch "ready use" Rohstoffe (wenige Prepolymere) |
| Toxizität | keine karzinogenen Substanzen | enthält freies karzinogenes 2-Butanonoxim |

Tabelle 2: Produktionseigenschaften

| **Eigenschaft** | **Bsp. 1** | **Bsp. 2 (Vergleichsbsp.)** |
|---|---|---|
| Reaktionszeit | 70s s | fest 2 min 150°C), keine Katalyse möglich |
| Produktionstemperatur | 150°C, Steigerung der Reaktionsgeschw. durch Temperatur möglich → höhere Produktivität | 150°C, Steigerung der Reaktionsgeschw. durch Temperatur nicht möglich |

Tabelle 3: Produkteigenschaften

| **Eigenschaft .** | **Bsp. 1** | **Bsp. 2 (Vergleichsbeispiel)** |
|---|---|---|
| Emissionen (Fresenius Prüfverfahren PB VWT 709) | VOC 80 ppm, keine gefährlichen Arbeitsstoffe mehr enthalten | VOC 180 ppm, Anteile karzinogener Verbindungen (aber unterhalb der Grenzwerte) |
| mechanische Eigenschaften | für beide Systeme nahezu identisch | |
| Alterungsbeständigkeit | für beide Systeme nahezu identisch | |

**Patentansprüche**

**1.** Verbundgebilde mit einer oder mehreren Polyurethanschichten, einer Trägerschicht, insbesondere einer textilen Trägerschicht oder einer Trägerschicht aus PVC, Polyolefin oder Polyurethanschaum, sowie einer gegebenenfalls zwischen diesen Schichten angeordneten Klebstoffschicht, wobei mindestens eine der Polyurethanschichten ein Polyurethan der Formel (I)

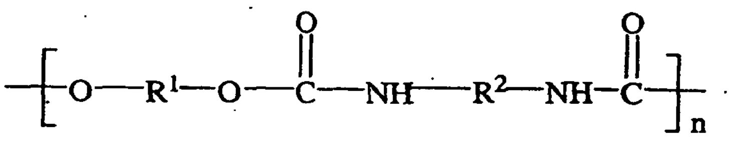

(I)

enthält, worin bedeuten:

-O-$R^1$-O- die Reste zumindest zweier Polyole mit endständigen primären und/oder sekundären Hydroxyfunktionalitäten,
$R^1$ und $R^2$ unabhängig voneinander einen organischen Rest, der aliphatische, cycloaliphatische, aromatische und/oder heterocyclische Gruppen umfasst, und
n eine ganze Zahl von 1 bis 50000, **dadurch gekennzeichnet, dass** es sich bei den Polyolen um bifunktionelle

und trifunktionelle Polyole handelt, die im Verhältnis 1 zu 2 bis 5 zu 1 stehen.

2. Verbundgebilde nach Anspruch 1, **dadurch gekennzeichnet, dass** zwei Polyurethanschichten vorgesehen sind, wobei die äußere und/oder die innere Polyurethanschicht ein Polyurethan der Formel (I) enthält.

3. Verbundgebilde nach Anspruch 1 oder 2, **dadurch gekennzeichnet, dass** die Polyole ein Molekulargewicht von 2000 bis 12000 aufweisen.

4. Verbundgebilde nach mindestens einem der vorhergehenden Ansprüche, **dadurch gekennzeichnet, dass** die Polyole Polyetherglykole und/oder Polyesterglykole sind.

5. Verbundgebilde nach Anspruch 4, **dadurch gekennzeichnet, dass** es sich bei den Polyetherglykolen um Poly (oxypropylen)glykole und bei den Polyesterglykolen um Glykole dimerer Fettsäuren handelt.

6. Verbundgebilde nach mindestens einem der vorhergehenden Ansprüche, **dadurch gekennzeichnet, dass** die primären und sekundären Hydroxyfunktionalitäten der Polyole im Verhältnis von 2 zu 1 bis 1 zu 6 stehen.

7. Verbundgebilde nach mindestens einem der vorhergehenden Ansprüche, **dadurch gekennzeichnet, dass** der Rest $R^2$ auf Isophorondiisocyanat und/oder Hexamethylendiisocyanat zurückgeht.

8. Verbundgebilde nach mindestens einem der Ansprüche 1 bis 6, **dadurch gekennzeichnet, dass** der Rest $R^2$ auf Diphenylmethandiisocyanat (MDI) und/oder Toluylendiisocyanat zurückgeht.

9. Verbundgebilde nach mindestens einem der vorhergehenden Ansprüche, **dadurch gekennzeichnet, dass** die Polyurethanschicht(en), die das Polyurethan der Formel (I) enthält (enthalten), einen Festkörpergehalt von mindestens 95 % aufweist (aufweisen)..

10. Verbundgebilde nach mindestens einem der vorhergehenden Ansprüche, **dadurch gekennzeichnet, dass** die Polyurethanschicht(en), die das Polyurethan der Formel (I) enthält (enthalten), eine Dicke von 0,2 mm bis 0,5 mm aufweist (aufweisen).

11. Verbundgebilde nach mindestens einem der vorhergehenden Ansprüche, **dadurch gekennzeichnet, dass** die Polyurethanschicht(en), die das Polyurethan der Formel (I) enthält (enthalten), eine Dichte von 0,3 g/ml bis 0,8 g/ml aufweist (aufweisen).

12. Verbundgebilde nach mindestens einem der vorhergehenden Ansprüche, **dadurch gekennzeichnet, dass** der Gehalt der Polyurethanschicht(en), die das Polyurethan der Formel (I) enthält (enthalten), an flüchtigen organischen Chemikalien kleiner als 100 ppm ist.

13. Verbundgebilde nach mindestens einem der vorhergehenden Ansprüche, **dadurch gekennzeichnet, dass** es eine Prägung aufweist.

14. Verfahren zur Herstellung eines Verbundgebildes nach mindestens einem der Ansprüche 1 bis 13, **dadurch gekennzeichnet, dass**

a) eine oder mehrere Polyurethanschichten auf einen dehäsiv ausgerüsteten Träger aufgebracht werden, wobei mindestens eine der Polyurethanschichten ausgebildet wird, indem eine zur Bildung eines Polyurethans fähige reaktive Streichmasse der Zusammensetzung (A), die

i) ein bifunktionelles und ein trifunktionelles Polyol $HO-R^1-OH$ mit primären und/oder sekundären endständigen Hydroxyfunktionalitäten, -
ii) ein Diisocyanat $OCN-R^2-NCO$ und/oder einen Diisocyanat-Präpolymer $OCN-R^2-NH-CO-O-R^1-O-CO-NH-R^2-NCO$, wobei $R^1$ und $R^2$ unabhängig voneinander für einen organischen Rest stehen, der aliphatische, cycloaliphatische, aromatische und/oder heterocyclische Gruppen umfasst, und
iii) einen Katalysator

enthält,
auf den dehäsiv ausgerüsteten Träger bzw. eine vorgebildete Polyurethanbeschichtung des dehäsiv ausgerüsteten Trägers ausgestrichen und thermisch ausgehärtet wird;
b) gegebenenfalls eine Klebstoffschicht auf die ausgehärtete Polyurethanschicht aufgebracht wird;
c) eine Trägerschicht, insbesondere eine textile Trägerschicht, auf der dem Band entgegengesetzten Seite aufgebracht wird und
d) das Verbundgebilde, gegebenenfalls nach Aushärten der Klebstoffschicht, von dem Band abgezogen wird.

**15.** Verfahren nach Anspruch 14, **dadurch gekennzeichnet, dass** zwei Polyurethanschichten aufgebracht werden, wobei die äußere und/oder die innere Polyurethanschicht unter Verwendung einer zur Bildung eines Polyurethans fähigen reaktiven Streichmasse der Zusammensetzung (A) gebildet wird.

**16.** Verfahren nach Anspruch 14 oder 15, **dadurch gekennzeichnet, dass** als Katalysator ein Metallacetylacetonat eingesetzt wird.

**17.** Verfahren nach Anspruch 16, **dadurch gekennzeichnet, dass** als Metallacetylacetonat Nickelacetylacetonat eingesetzt wird.

**18.** Verfahren nach mindestens einem der Ansprüche 14 bis 17, **dadurch gekennzeichnet, dass** eine zur Bildung eines Polyurethans fähige reaktive Streichmasse der Zusammensetzung (A) eingesetzt wird, die beim Ausstreichvorgang eine Viskosität von 1 Pa s bis 20 Pa s aufweist.

**19.** Verfahren nach Anspruch 18, **dadurch gekennzeichnet, dass** der Zeitraum, innerhalb dessen die Viskosität der zur Bildung eines Polyurethans fähigen reaktiven Streichmasse der Zusammensetzung (A) innerhalb des Bereiches von 1 Pa s bis 20 Pa s liegt (offene Zeit) größer als 6 Stunden ist.

**20.** Verfahren nach mindestens einem der Ansprüche 14 bis 19, **dadurch gekennzeichnet, dass** eine zur Bildung eines Polyurethans fähige reaktive Streichmasse der Zusammensetzung (A) eingesetzt wird, die ein strukturviskoses Verhalten zeigt.

**21.** Verfahren nach mindestens einem der Ansprüche 14 bis 20, **dadurch gekennzeichnet, dass** der thermische Aushärtungsschritt über einen Zeitraum von 0,1 bis 4 Minuten bei 100 bis 180° C durchgeführt wird.

**22.** Verfahren nach Anspruch 21, **dadurch gekennzeichnet, dass** der thermische Aushärtungsschritt über einen Zeitraum von 90 bis 150 Sekunden bei 145 bis 155 °C durchgeführt wird.

**23.** Verfahren nach mindestens einem der Ansprüche 14 bis 22, **dadurch gekennzeichnet, dass** ein dehäsiv ausgerüsteter Träger eingesetzt wird, der ein Negativ einer gewünschten Prägung aufweist.

**24.** Verwendung des Verbundgebildes nach mindestens einem der Ansprüche 1 bis 13 als Kunstleder.

**25.** Verwendung des Verbundgebildes nach mindestens einem der Ansprüche 1 bis 13 als Schaumfolie.

## Revendications

**1.** Produit composite comportant une ou plusieurs couches de polyuréthanne, une couche de support, en particulier une couche de support textile ou une couche de support en PVC, polyoléfine ou mousse de polyuréthanne, ainsi qu'une couche d'adhésif éventuellement disposée entre ces couches, au moins l'une des couches de polyuréthanne contenant un polyuréthanne de formule (I)

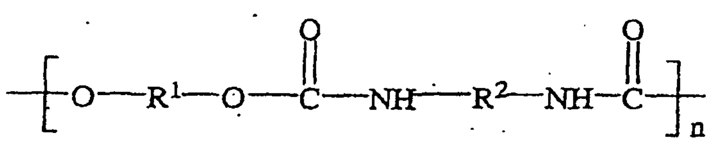

(I)

dans laquelle :

-O-$R^1$-O- représente les restes d'au moins deux polyols à fonctionnalités hydroxy primaires et/ou secondaires en bout de chaîne,
$R^1$ et $R^2$ représentent indépendamment l'un de l'autre un radical organique qui comprend des groupes aliphatiques, cycloaliphatiques, aromatiques et/ou hétérocycliques, et
n est un nombre entier allant de 1 à 50 000,
**caractérisé en ce que** les polyols consistent en des polyols bifonctionnels et trifonctionnels qui sont en un rapport de 1:2 à 5:1.

**2.** Produit composite selon la revendication 1, **caractérisé en ce que** sont prévues deux couches de polyuréthanne, la couche externe et/ou la couche interne contenant un polyuréthanne de formule (I).

**3.** Produit composite selon la revendication 1 ou 2, **caractérisé en ce que** les polyols ont une masse moléculaire de 2000 à 12 000.

**4.** Produit composite selon au moins l'une des revendications précédentes, **caractérisé en ce que** les polyols sont des polyétherglycols et/ou des polyesterglycols.

**5.** Produit composite selon la revendication 4, **caractérisé en ce que** les polyétherglycols consistent en des poly (oxypropylène)glycols et les polyesterglycols consistent en des glycols d'acides gras dimères.

**6.** Produit composite selon au moins l'une des revendications précédentes, **caractérisé en ce que** les fonctionnalités hydroxy primaires et secondaires des polyols sont en un rapport de 2:1 à 1:6.

**7.** Produit composite selon au moins l'une des revendications précédentes, **caractérisé en ce que** le radical $R^2$ provient d'isophorone-diisocyanate et/ou d'hexaméthylène-diisocyanate.

**8.** Produit composite selon au moins l'une des revendications 1 à 6, **caractérisé en ce que** le radical $R^2$ provient de diphénylméthanediisocyanate (MDI) et/ou de toluylènediisocyanate.

**9.** Produit composite selon au moins l'une des revendications précédentes, **caractérisé en ce que** la(les) couche(s) de polyuréthanne qui contient(tiennent) le polyuréthanne de formule (I) a(ont) une teneur en matière solide d'au moins 95 %.

**10.** Produit composite selon au moins l'une des revendications précédentes, **caractérisé en ce que** la(les) couche(s) de polyuréthanne qui contient(tiennent) le polyuréthanne de formule (I) a(ont) une épaisseur de 0,2 mm à 0,5 mm.

**11.** Produit composite selon au moins l'une des revendications précédentes, **caractérisé en ce que** la(les) couche(s) de polyuréthanne qui contient(tiennent) le polyuréthanne de formule (I) a(ont) une densité de 0,3 g/ml à 0,8 g/ml.

**12.** Produit composite selon au moins l'une des revendications précédentes, **caractérisé en ce que** la teneur en composés chimiques organiques volatils de la (des) couche(s) de polyuréthanne qui contient(tiennent) le polyuréthanne de formule (I) est inférieure à 100 ppm.

**13.** Produit composite selon au moins l'une des revendications précédentes, **caractérisé en ce qu'**il présente un gaufrage.

**14.** Procédé pour la fabrication d'un produit composite selon au moins l'une des revendications 1 à 13, **caractérisé en ce que**

a) on applique une ou plusieurs couches de polyuréthanne sur un support muni d'un traitement antiadhésif, au moins une des couches de polyuréthanne étant formée par application d'une matière d'enduction réactive de composition (A), apte à la formation d'un polyuréthanne, qui contient

i) un polyol bifonctionnel et un polyol trifonctionnel HO-$R^1$-OH à fonctionnalités hydroxy primaires et/ou secondaires en bout de chaîne,
ii) un diisocyanate OCN-$R^2$-NCO et/ou un prépolymère de diisocyanate OCN-$R^2$-NH-CO-O-$R^1$-O-CO-NH-$R^2$-NCO, $R^1$ et $R^2$ représentant indépendamment l'un de l'autre un radical organique qui comprend des groupes aliphatiques, cycloaliphatiques, aromatiques et/ou hétérocycliques, et

iii) un catalyseur,

sur le support muni d'un traitement antiadhésif ou sur un revêtement de polyuréthanne préformé du support muni d'un traitement antiadhésif, et
on la(les) fait durcir thermiquement ;
b) éventuellement on applique une couche d'adhésif sur la couche de polyuréthanne durcie ;
c) on applique une couche de support, en particulier une couche de support textile, sur la face opposée à la bande et
d) on retire de la bande le produit composite, éventuellement après durcissement de la couche d'adhésif.

**15.** Procédé selon la revendication 14, **caractérisé en ce qu'**on applique deux couches de polyuréthanne, la couche externe et/ou la couche interne de polyuréthanne étant durcie(s) à l'aide d'une matière d'enduction réactive de composition (A), apte à la formation d'un polyuréthanne.

**16.** Procédé selon la revendication 14 ou 15, **caractérisé en ce qu'**on utilise en tant que catalyseur un acétylacétonate d'un métal.

**17.** Procédé selon la revendication 16, **caractérisé en ce qu'**on utilise en tant qu'acétylacétonate d'un métal l'acétylacétonate de nickel.

**18.** Procédé selon au moins l'une des revendications 14 à 17, **caractérisé en ce qu'**on utilise une matière d'enduction réactive de composition (A), apte à la formation d'un polyuréthanne, qui présente lors du processus d'enduction une viscosité de 1 Pa.s à 20 Pa.s.

**19.** Procédé selon la revendication 18, **caractérisé en ce que** le temps pendant lequel la viscosité de la matière d'enduction réactive de composition (A), apte à la formation d'un polyuréthanne, est de 1 Pa.s à 20 Pa.s (délai d'utilisation) est de plus de 6 heures.

**20.** Procédé selon au moins l'une des revendications 14 à 19, **caractérisé en ce qu'**on utilise une matière d'enduction réactive de composition (A), apte à la formation d'un polyuréthanne, qui présente un comportement de viscosité inhérente.

**21.** Procédé selon au moins l'une des revendications 14 à 20, **caractérisé en ce que** l'étape de durcissement thermique est effectuée en un espace de temps de 0,1 à 4 minutes à 100-180°C.

**22.** Procédé selon la revendication 21, **caractérisé en ce que** l'étape de durcissement thermique est effectuée en un espace de temps de 90 à 150 secondes à 145-155°C.

**23.** Procédé selon au moins l'une des revendications 14 à 22, **caractérisé en ce qu'**on utilise un support muni d'un traitement antiadhésif qui présente un négatif d'un gaufrage désiré.

**24.** Utilisation du produit composite selon au moins l'une des revendications 1 à 13, en tant que cuir synthétique.

**25.** Utilisation du Produit composite selon au moins l'une des revendications 1 à 13, en tant que film expansé.

## Claims

**1.** Composite structure having one or more polyurethane layers, a support layer, in particular a textile support layer or a support layer of PVC, polyolefin or polyurethane foam, and also a layer of adhesive optionally disposed between these layers, at least one of the polyurethane layers comprising a polyurethane of the formula (I)

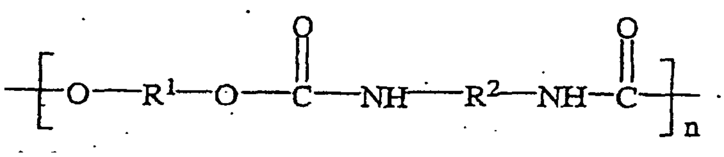

(I)

where

-O-$R^1$-O- denotes the radicals of at least two polyols having terminal primary and/or secondary hydroxyl functionalities,
$R^1$ and $R^2$ independently denote an organic radical comprising aliphatic, cycloaliphatic, aromatic and/or heterocyclic groups, and
n denotes an integer from 1 to 50 000, **characterized in that** the polyols comprise bifunctional and trifunctional polyols in a ratio from 1:2 to 5:1.

**2.** Composite structure according to Claim 1, **characterized in that** there are two polyurethane layers, the outer and/or the inner polyurethane layer comprising a polyurethane of the formula (I).

**3.** Composite structure according to Claim 1 or 2, **characterized in that** the polyols have a molecular weight from 2000 to 12 000.

**4.** Composite structure according to at least one of the preceding claims, **characterized in that** the polyols are polyether glycols and/or polyester glycols.

**5.** Composite structure according to Claim 4, **characterized in that** the polyether glycols comprise poly(oxypropylene) glycols and the polyester glycols comprise glycols of dimeric fatty acids.

**6.** Composite structure according to at least one of the preceding claims, **characterized in that** the primary and secondary hydroxyl functionalities of the polyols are in a ratio from 2:1 to 1:6.

**7.** Composite structure according to at least one of the preceding claims, **characterized in that** the $R^2$ radical is based on isophorone diisocyanate and/or hexamethylene diisocyanate.

**8.** Composite structure according to at least one of Claims 1 to 6, **characterized in that** the $R^2$ radical is based on diphenylmethane diisocyanate (MDI) and/or tolylene diisocyanate.

**9.** Composite structure according to at least one of the preceding claims, **characterized in that** the polyurethane layer or layers comprising the polyurethane of the formula (I) has or have a solid content of at least 95%.

**10.** Composite structure according to at least one of the preceding claims, **characterized in that** the polyurethane layer or layers comprising the polyurethane of the formula (I) has or have a thickness in the range from 0.2 mm to 0.5 mm.

**11.** Composite structure according to at least one of the preceding claims, **characterized in that** the polyurethane layer or layers comprising the polyurethane of the formula (I) has or have a density in the range from 0.3 g/ml to 0.8 g/ml.

**12.** Composite structure according to at least one of the preceding claims, **characterized in that** the polyurethane layer or layers comprising the polyurethane of the formula (I) has or have a VOC (volatile organic chemicals) content of less than 100 ppm.

**13.** Composite structure according to at least one of the preceding claims, **characterized in that** it comprises an embossing.

**14.** Process for producing a composite structure according to at least one of Claims 1 to 13, **characterized in that**

a) one or more polyurethane layers are applied to a dehesive support, at least one of the polyurethane layers being formed by a reactive spreadable material capable of forming a polyurethane and having a composition (A) comprising

i) a bifunctional and a trifunctional polyol HO-$R^1$-OH having primary and/or secondary terminal hydroxyl functionalities,
ii) a diisocyanate OCN-$R^2$-NCO and/or a diisocyanate prepolymer OCN-$R^2$-NH-CO-O$R^1$-O-CO-NH-$R^2$-NCO, where $R^1$ and $R^2$ independently represent an organic radical comprising aliphatic, cycloaliphatic, aromatic and/or heterocyclic groups, and
iii) a catalyst

being spread atop the dehesive support or a preformed polyurethane coating on the dehesive support being spread out and
thermally cured;
b) optionally a layer of adhesive is applied atop the cured layer of polyurethane;
c) a support layer, in particular a textile support layer, is applied atop the side opposite the belt, and
d) the composite structure, if appropriate after curing of the layer of adhesive, is peeled off the belt.

**15.** Process according to Claim 14, **characterized in that** two layers of polyurethane are applied, the outer and/or the inner layer of polyurethane being formed by using a reactive spreadable material capable of forming a polyurethane and having composition (A).

**16.** Process according to Claim 14 or 15, **characterized in that** a metal acetylacetonate is used as catalyst.

**17.** Process according to Claim 16, **characterized in that** nickel acetylacetonate is used as metal acetylacetonate.

**18.** Process according to at least one of Claims 14 to 17, **characterized in that** the reactive spreadable material capable of forming a polyurethane and having composition (A) has a viscosity in the range from 1 Pas to 20 Pas in the course of being spread out.

**19.** Process according to Claim 18, **characterized in that** the period within which the viscosity of the reactive spreadable material capable of forming a polyurethane and having composition (A) is within the range from 1 Pas to 20 Pas (open time) is greater than 6 hours.

**20.** Process according to at least one of Claims 14 to 19, **characterized in that** the reactive spreadable material capable of forming a polyurethane and having composition (A) exhibits pseudoplasticity.

**21.** Process according to at least one of Claims 14 to 20, **characterized in that** the thermal curing is effected at 100 to 180°C for a period in the range from 0.1 to 4 minutes.

**22.** Process according to Claim 21, **characterized in that** the thermal curing is effected at 145 to 155°C for a period in the range from 90 to 150 seconds.

**23.** Process according to at least one of Claims 14 to 22, **characterized in that** a dehesive support comprising a negative of a desired embossing is used.

**24.** Use of the composite structure according to at least one of Claims 1 to 13 as artificial leather.

**25.** Use of the composite structure according to at least one of Claims 1 to 13 as foam sheeting.